(19) Europäisches Patentamt
European Patent Office
Office européen des brevets

(11) Publication number: **0 001 711**
**A1**

(12) **EUROPEAN PATENT APPLICATION**

(21) Application number: **78300520.0**

(22) Date of filing: **19.10.78**

(51) Int. Cl.²: **C 09 D 11/02**
**C 09 D 11/10, C 08 L 67/08**

(30) Priority: **21.10.77 GB 43942/77**

(43) Date of publication of application:
**02.05.79 Bulletin 79/9**

(84) Designated contracting states:
**DE FR NL SE**

(71) Applicant: **NATIONAL RESEARCH DEVELOPMENT CORPORATION**
P.O. Box 236 Kingsgate House 66-74 Victoria Street
London SW1E 6SL(GB)

(72) Inventor: **Burstall, Michael Lyle**
56 Denzil Road
Guildford Surrey(GB)

(72) Inventor: **Mattingley, John Trevor**
7 Wayside Crescent
Harrogate, HG2 8NJ(GB)

(72) Inventor: **Carter, Bruce**
2 Bryony Hill
Habledon, Godalming Surrey(GB)

(74) Representative: **Crespi, Romeo Stefano**
Patent Department National Research Development
Corporation P O Box 236 Kingsgate House, 66-74 Victoria
Street
London SW1E 6SL(GB)

(54) Readily cleavable printing ink vehicle, method of making and printing ink containing the same.

(57) A printing ink product which comprises an ink vehicle the chemical structure of which includes linkages which are readily cleavable under conditions which are sufficiently different from those of normal ink usage so as to permit printing with the ink in the customary manner, though are not so severe as to cause substantial disruption or damage of paper fibre.

EP 0 001 711 A1

115927

### PRINTING INK AND PRINTING INK ADDITIVES

This invention relates to printing inks and to additives for printing inks.

Printing inks typically comprise pigmented material dispersed in a suitable vehicle which acts as a carrier for the ink during printing and may also serve to bind the pigment to the printed substrate.

In recent years the demand for paper and board products, coupled with dwindling natural wood fibre resources, has necessitated the recycling of waste paper, and a major proportion of all board and corrugating papers at present produced in the United Kingdom is based on recycled fibre. Other paper products, such as printing papers, tissue and higher grades of packaging, however, require de-inking of the waste paper before it is suitable as a feed-stock for these uses, and customary de-inking processes include either washing or flotation processes in which the ink and pulp material are effectively separated. In most cases a satisfactory level of de-inking is obtained.

With some paper-ink systems however, there is considerable resistance to the separation of the ink and pulp material. For instance, typical ink formulations for sheet fed and web fed lithographic printing contain components which become crosslinked by oxidation, through either a catalytically induced mechanism or natural ageing, or by radiation induced curing e.g. U.V. - curing, to form large three-dimensional ink particles which become entangled with the paper fibre and resist de-inking.

This poses a real problem as mixed waste paper feed stocks almost inevitably contain some material printed with such de-inking resistant inks.

Printing inks including in particular those which resist de-inking, such as certain sheet-fed offset, aged non-heat set web off-set and UV-curved inks, have now been modified and modifier additives for inks have been devised to preferably enhance their de-inking properties, whilst maintaining their ink drying characteristics.

According to the present invention a printing ink comprises an ink vehicle the chemical structure of which includes linkages which are readily cleavable under specific conditions as hereinafter defined.

Accordingly also, the invention includes a printing ink vehicle or component thereof, the chemical structure of which includes linkages which are readily cleavable under said specific conditions.

Further, the invention includes a modifier additive for a printing ink which is such that it interacts with the ink vehicle and introduces to the chemical structure thereof linkages which are readily cleavable under said specific conditions.

Moreover, the invention includes processes for the production of the printing inks, printing ink vehicles and components thereof, and printing ink modifier additives of the invention.

Generally, though not exclusively, the inks of the present invention are those which contain an ink vehicle which subsequent to printing undergoes cross-linking or other polymerisation, typically to produce large three-dimensional particles which become entangled with the paper fibres. Thus, for example, the inks may include non-heat set web-offset, sheet-fed offsent and U.V. -cured inks and similar inks. It will be appreciated, however, that the inks of the invention also include newly derived inks as well as straightforward modification of existing ink systems, and also inks which in their unmodified form undergo no significant cross-linking or other polymerisation subsequent to printing.

The ink vehicle may comprise polymeric material, usually in combination with other material e.g. a mineral or vegetable drying oil, such as thos ink vehicles customarily used in offset inks. Alternatively, the ink vehicle may comprise a resin/solvent system, such as the vehicles used in gravure printing inks. For example, the ink vehicle may comprise polyester and alkyd resin systems, such as polyesters of polyhydric alcohols e.g. glycerol, trimethylolpropane and pentaerythritol, and polyfunctional acids e.g. phthalic acids and rosin derived acids, often in combination with a drying or semi-drying fatty acid material e.g. based on linseed oil. Such polymeric and resin/solvent ink vehicles typically become crosslinked after printing; for instance, on further polymerisation as a result of catalytic drying processes, or subsequently during ageing.

- 4 -

Alternatively, the ink vehicle may _ab initio_ comprise monomeric or oligomeric material which undergoes cross linking or other polymerisation only after printing. Thus, the vehicle may comprise polyester, urethane or epoxy derived acrylic ester materials as in the vehicles customarily used in U.V.-cured inks. For instance, the ink vehicle may comprise acrylates or methacrylates of polyhydric alcohols such as trimethylolpropane. These monomeric ink vehicles may become polymerised after printing, typically during curing e.g. U.V.-curing.

The specific conditions employed for cleavage of the linkages, contained within the chemical structure of the ink vehicle or introduced thereto by the modifier additive, are characteristically sufficiently different from those of normal ink usage so as to permit printing with the ink in the customary manner, though are not so severe as to cause substantial disruption or damage e.g. pulp fibre breakdown of the paper fibre. It will be appreciated that the particular specific conditions employed are dependent on the nature of the linkage. Conditions which may be employed for cleavage of the linkages are, for instance, reductive or oxidative conditions, preferably mildly reductive or mildly oxidative conditions, and examples of linkages which are cleavable under such conditions include disulphide linkages (-S-S-).

Preferred conditions for cleavage are alkaline conditions, especially mildly alkaline conditions, in particular the mildly alkaline conditions which conveniently prevail during the pulping of waste paper and which typically include the presence of small quantities of surface active agents such as a soap or a detergent. For instance, typical alkaline conditions prevailing during the pulping of waste paper are alkaline conditions in the range from about pH 8 up to about pH 12 or especially pH's in the range from about 9 up to about 11.5. Examples of suitable linkages which may be cleaved under mildly alkaline conditions are acylsiloxy ($-COSiR_2-$), phosphate ester and carbonate ($-OCOO-$) linkages, and chemically similar linkages. Particularly preferred cleavable linkages are silicon ether linkages. Suitable silicon ether linkages for use in the present invention include groups of the general formula $-O-Si(R^1R^2)-O-$ wherein $R^1$ and $R^2$ may be aromatic residues e.g. phenyl residues, or aliphatic residues, preferably alkyl residues, especially lower alkyl residues e.g. ethyl or methyl residues. Other silicon ether linkages including those of general formulae $-O-SiR(-O-)2$ and $Si(-O-)4$ may also provide preferred cleavable linkages.

The modified inks of the present invention contain the cleavable linkages within their ink vehicle chemical structures. For example, the preferred silicon ether linkage, or other cleavable linkage, may be present as linkages within the polymer chain structure of the polymeric polyester vehicles customarily used in conventional lithographic (offset) printing inks, or alternatively the linkage may be present as a link within or between separate monomeric, or oligomeric units of the vehicles customarily used in U.V.-cured inks.

The cleavable linkage. may be incorporated into the ink vehicle at any stage during its preparation, and convenient methods for such incorporation will be apparent to those skilled in the art based on well known preparative chemistry principles. Linkages may be incorporated into the vehicle during the initial stages of its preparation. For example, preferred silicon ether linkages and other similar linkages may be incorporated into polyester and alkyd resin vehicles during the initial stages of their preparation by partial silylation or other appropriate reaction of the polyhydric alcohol component, e.g. glycerol, trimethylolpropane, pentaerythritol. Partial silylation of the polyhydric alcohol may be achieved by reaction of the alcohol with a suitable dialkoxysilane such as dialkoxydimethyl or dialkoxydiphenylsilane. Thereafter the partially silylated product may be esterified with organic acids, such as phthalic acid, maleinised rosin, acrylic acid and methacrylic acid, and further compounded as desired, e.g. with linseed oil, to provide the required ink vehicle of the invention.

Also, the cleavable linkage may be incorporated into the vehicle during the later stages of its preparation. For example, the preferred silicon either linkage and other similar linkages may be incorporated into the polyester or alkyd resin ink vehicles by silylation or other reaction of free hydroxyl groups at any appropriate stage during the vehicle preparation. This silylation may be carried out after resin preparation provided a sufficient excess of hydroxyl groups remain in the polyester resin following polyesterification. The silylated product so prepared may then be used directly as a component of an ink vehicle and ink according to the invention.

In addition to full synthesis of modified inks and ink vehicles, the invention also provides modifier additives which characteristically interact with unmodified ink vehicles to introduce the cleavable linkages. Interaction between additive and ink vehicle may take place either before or after printing; for instance on addition of additive to the vehicle during ink formulation or after printing usually in association with the cross-linking or other polymerisation occurring on curing and/or ageing. Suitable additives are thus either capable of reacting with and/or polymerising with the vehicle and typically contain the cleavable linkage. For example, the modified ink vehicles or suitable components thereof e.g. modified polyesters or modified alkyd resins, may conveniently provide suitable modifier additives. Furthermore the partially esterified or etherified e.g. partially silylated, polyhydric alcohols used in preparation of the modified vehicles may also provide suitable modifier additives. Preferred modifier additives, however, are derived from these partially esterified or ·

etherified polyhydric alcohols e.g. partially silylated polyhydric alcohols, by esterification of remaining free hydroxyl groups with suitable organic acids, such as fatty acids e.g. linoleic acid for off-set ink modifiers, or acrylic and methacrylic acids for U.V.-cured ink modifiers.

Generally the modifier additives of the invention may be blended with suitable compatible ink systems in the usual manner at levels in the range from about 5 up to about 50% by weight of the unmodified ink. Preferably from about 5 up to about 30%, especially from about 10% to about 20% by weight of additive is used. Also, in general it has been found with the preferred silicon ether linkage that a silicon (Si) content of from about .1 up to about 5% by weight, or preferably from about .5 up to about 2% by weight of the modified ink gives satisfactory results in most cases, and similar levels of appropriate linkage components are expected to be suitable for other linkages.

Inks modified according to the invention advantageously exhibit improved de-inking properties, preferably in relation to both washing and flotation de-inking techniques, as compared with corresponding un-modified inks. Generally the modified offset and U.V.-cured inks of the invention are more easily separated from the paper fibre during de-inking processes than are unmodified inks; for instance preferred silicon ether modified inks preferably exhibiting full ink-fibre release as compared with the minimal ink-fibre release obtained with corresponding unmodified aged web-offset and U.V. -cured inks. Also, on repulping prior to de-inking the average ink particle size of released films of modified inks is usually substantially smaller than that of corresponding unmodified inks, preferably less than about 20 microns in diameter i.e. the threshold at which the pulp appears specky. Thus, advantageously, use of modified ink may, without recourse to mechanically based dispersion techniques, assist in the production of speck-free repulped feed stocks. Furthermore, use of modified inks may marginally improve the rate at which ink is removed from paper fibre during de-inking processes.

Also, in relation to inks in general, the cleavable linkages may, on cleavage, provide chemical residues which cause the ink to exhibit advantageously improved dispersibility properties. For example, incorporation of bleach sensitive or alkali sensitive e.g. preferred silicon ether, linkages in non-cross linking ink vehicles such as silicon ether modified hydrocarbon resins, on cleavage, may give rise to hydrophilic groups giving improved dispersibility e.g. alkaline dispersibility, to the ink.

Furthermore, there are indications to suggest that modified inks based on vehicles containing the preferred silicon ether linkages, may provide printings of improved quality, in particular in respect of rub resistance.

The invention is further described by way of illustation only in the following examples which relate to the modification of inks, modified inks so produced and comparative tests of the de-inking properties of modified inks.

## Example 1   Partial Silylation of Polyhydric Alcohols

Trimethylolpropane (TMP) is partially silylated with a suitable dialkoxydialkylsilane, which is conveniently obtained from the corresponding dichlorodialkylsilane by reaction with an appropriate alcohol in the presence of triethylamine.

TMP (1 mole) is mixed with di-n-butoxydimethylsilane (0.5 - 1.0 mole) and the mixture stirred rapidly whilst the temperature is raised to 150 - 180°C. Partially silylated TMP is produced and the transetherification product n-butanol (1.0 - 2.0 mole) is distilled from the mixture, forcing the reaction to completion.   If desired, the silylation reaction may be carried out at lower temperatures making use of acid or base catalysts, such as p-toluenesulphonic acid or sodium methoxide.

Partially silylated products of other polyhydric alcohols are prepared by similar procedures.  For example, glycerol is silylated with diethoxydimethylsilane;  whereas higher boiling ethers, such as di-2-ethylhexyloxydimethylsilane, are required for production of pentaerythritol silyl ethers.

The partially silylated alcohols produced above may provide modifier additives for use according to the invention, though more usually the partially silylated alcohol is subjected to further synthetic steps before it is used as a modifier additive.

## Example 2  Esterification of Partially Silylated Alcohols

Partially silylated alcohols, as prepared in Example 1, are esterified with suitable organic acids for production of modified ink vehicle and modifier additives according to the invention.

## Preparation of Modified Ink Vehicles

For ink vehicle preparation, for instance, for preparation of hard or soft resins for blending into the liquid vehicles of either solvent or oil based inks, suitable mixtures of partially silylated and un-modified alcohols are polyesterified with polyfunctional organic acids.

Silylated TMP (0.25 mole), as prepared in Example 1, TMP (0.75 mole), 40% acid content maleinised rosin (0.35 mole) and benzoic acid (0.25 mole) are mixed and polyesterification is effected under strong acid catalysis by heating to 260°C under an atmosphere of nitrogen for an appropriate period of time. Water, the by-product of the esterification is azeotroped out of the reaction mixture.  The hard resin produced is used as such for ink vehicle formulation, or is converted to a soft resin by transesterification with from 10 - 30% of an appropriate drying or semi drying vegetable or other oil, such as linseed oil.  The soft resin so produced is then incorporated in the customary fashion into a typical pigment dispersion, such as carbon black in a mineral or drying oil, to give the desired ink formulation.

Preparation of Modifier Additives

Purified silylated alcohol as produced in Example 1, is esterified with suitable organic acids to provide modifier additives according to the invention.

For drying oil based ink modifiers, silylated TMP (1 mole), prepared from equimolar amounts of TMP and dimethyldibutoxysilane, is mixed with linoleic acid (1 mole) and esterification carried out by heating under strongly acidic conditions and removing water by azeotropic distillation, to give a silylated trimethylolpropane monolinoleate product. The monolinoleate product is used as a modifier additive, usually as an addition of from about 10% to about 30% by weight, for drying oil based inks, i.e. inks which dry, solely or partially by oxidative cross-linking of fatty acid residues.

Alternatively, for U.V. curing ink systems, the partially silylated TMP is converted to acrylic acid esters or methacrylic acid esters; for instance, by esterification with acrylic acid, transesterification with alkyl acrylates, or more preferably by reaction with acryloyl chloride neutralising the hydrogen chloride produced in situ with very finely divided anhydrous sodium carbonate. The silylated acrylate product is blended with pigmented U.V. curable polymers and oligomer at levels of about 20% by weight to give modified inks suitable for U.V. cured printing.

## Example 3  Post-Esterification Silylation

As an alternative to the partial silylation of the alcohol, as described in Example 1, the silylation step may be carried out following polyesterification of un-modified alcohol.

A suitable resin product, containing free hydroxyl groups is prepared. Maleinised rosin (0.2 mole), TMP (0.40 mole) and benzoic acid (0.25 mole) are polyesterified using azeotropic distillation and strong acid catalysis until the acid number of the resin is below 20 i.e. less than 20 mg of KOH required per gm of resin to neutralise the resin acid groups. The hard resin product is then silylated directly by addition of di-n-hexyl-oxydimethylsilane (0.06 mole) at a temperature at least $20^{o}$C below the silane boiling point and distilling out the n-hexanol product in the usual manner. The silylated resin product is then suitable for incorporation as a vehicle component in a suitable ink composition.

Also as an alternative to Example 2, modifier additives are prepared by post-esterification silylation procedures. For example, silylated trimethylolpropane monolinoleate is prepared by initial esterification (1 mole to 1 mole) and post-esterification silylation.

## Example 4  Comparison of De-inking Properties

The de-inking characteristics of silicon ether modified ink systems, prepared as outlined in previous examples  are compared with those of their un-modified counterparts  a variety of

paper substrates are printed with a standard selection of type face characters ranging from about $\frac{1}{8}$ to $\frac{3}{8}$ of an inch in height with inks of both kinds. Following ageing (non-heat set web offset printings), oxidative cross-linking (sheet fed lithographic printings) or radiation induced curing (U.V. cured printing), the printed material is subjected to standard laboratory de-inking trials by both washing and flotation procedures.

The washing procedures employed essentially consists of a low consistency (1 - 2%) paper disintegration procedure carried out in a standard pulp disintegrator for 75,000 revolutions, at pH 10, using 0.1% non-ionic detergent. The pulp washing procedure employed consists of a 2-stage wash at consistency changes of 0.05% to 5% per cycle using a 60 mesh screen.

The flotation procedure employed consists of an identical pulping phase except for omission of detergent. The flotation is performed in an 8 l. flotation tank fitted with a stirrer and base bubbler, at a consistency of 0.5% using 3% soap on fibre. A standard residence time of 30 minutes is adopted.

Standard hand sheets are prepared from the de-inked pulp products obtained from both de-inking procedures.

The de-inking properties of the inks are compared by visual, spectrophotometric and microscopic inspection of hand sheets, repulped suspensions and de-inked suspensions. In particular, estimation of the average size of retained ink particles in the hand sheets is made by visual and microscopic analysis, paying particular attention to the relationship between particle size and pulp pH for modified ink systems as compared with un-modified ink systems. A speck count appears to provide the most satisfactory method of evaluation. The results obtained for the various kinds of ink investigated are given below.

Generally, however, the presence of a surface active agent, such as the non-ionic detergent or soap, during washing or flotation appears to be particularly advantageous. In the absence of a surface active agent de-inking is not normally satisfactory due to the slow rate of ink particle disintegration.

Carbon Black/Linseed Oil Ink

The de-inking characteristics, a modified carbon black/ linseed oil ink (20 parts 20% carbon black-linseed dispersion, 10 parts of silylated TMP monolinoleate and 2 parts cobalt driers) are compared with a corresponding unmodified ink system (30 parts of 20% carbon-black-linseed dispersion, 2 parts cobalt driers) by the procedures outlined above. Examination of hand sheets reveals, for un-modified ink, ink particle sizes of $52,000\mu^2$ at pH7 and $15,400\mu^2$ at pH11; whereas the corresponding figures for the modified ink system are $60,000\mu^2$ and $360\mu^2$ respectively. Flotation experiments at pH10 give ink particle sizes of $900\mu^2$ for the modified ink and $20,250\mu^2$ for the un-modified system. Also, examination of the alkaline pulped material by microscopy indicates full ink/fibre release for the modified ink formulation as compared with the only partial release obtained using the un-modified ink.

The modified ink exhibits a high and complete level of rub resistance prior to de-inking.

## Maleinised Rosin/Linseed Alkyd Based Inks

A silylated maleinised rosin linseed alkyd is formulated in a carbon black - linseed dispersion at 25% givning a final ink silicon content of 0.75%. The de-inking characteristics of this modified formulation are compared with those of a corresponding un-modified alkyd ink at differing pH's. Typical ink particle sizes for the un-modified ink are $46500\mu^2$ and $17000\mu^2$ at pH 8.5 and ph 10.5 respectively, whereas the modified system gives corresponding average ink particle sizes of $51440\mu^2$ and $8370\mu^2$

## Non-heat Set Webb Offset Inks

An un-modified non-heat set web offset ink (35 parts mineral oil, 20 parts resin maleic alkyd, 15 parts carbon black and 30 parts linseed oil) and a corresponding modified ink (containing a further 10 parts of silylated TMP monolinoleate) are compared for de-inking efficiency. The printed news prints are subjected to temperatures of $60°C$ for 35 minutes to bring about induced ageing. On pulping at pH 10.5, the un-modified system has a typical ink particle size of $20,000\mu^2$ which is reduced to $860\mu^2$ in the modified system.

## U.V. Cured Ink Systems

Silylated TMP acrylates are incorporated into pigmented U.V. curable base resins and compared with corresponding unmodified U.V. curable ink systems for de-inking properties. Experiments indicate that the disilyl TMP monoacrylate is the preferred additive. This additive is incorporated as a 30% addition in a phthalocyanine blue epoxy acrylate base system and gives an ink formulation suitable for printing and curing in the normal manner. On de-inking ink particle size reductions equal to a factor of 5.6 are obtained using the modified ink formulation, as compared with a factor of 2.1 for a corresponding ink containing 30% of trimethylolpropane triacrylate.

The printings investigated are on uncoated surface sized wood free paper and particle size is compared for neutral pulping and pulping at pH 10.5.

On newsprints, no reduction in particle size is apparent for TMP triacrylate ink over the same pH differential as compared with a particle size reduction factor of 2.3 for the silylated acrylate ink. Both ink systems are initially fully cured to give a high degree of speck production when repulped at neutrality. The use of ether modified acrylate significantly reduces the speck characteristics of hand sheets prepared from newsprint samples and effectively completely despecked those from wood free printed samples.

It will be appreciated that the ink systems described above are simple artificial ink systems which are considerably removed from commercial ink formulations. Results obtained using more complex ink systems more akin to commercially available inks, however, give similar results in which the modified inks exhibit enhanced de-inking properties.

## CLAIMS

1. A printing ink product which comprises an ink vehicle the chemical structure of which includes linkages which are readily cleavable under conditions which are sufficiently different from those of normal ink usage so as to permit printing with the ink in the customary manner, though are not so severe as to cause substantial disruption or damage of paper fibre.

2. A product comprising a printing ink vehicle or component thereof having a chemical structure which includes linkages which are readily cleavable under conditions which are sufficiently different from those of the normal usage of the corresponding ink so as to permit printing with the ink in the customary manner, though are not so severe as to cause substantial disruption or damage of paper fibre.

3. A product comprising a modifier additive for a printing ink which is such that it interacts with the ink vehicle and introduces to the chemical structure thereof linkages which are readily cleavable under conditions which are sufficiently different from those of normal usage of the corresponding ink so as to permit printing with the ink in the customary manner, though are not so severe as to cause substantial disruption or damage of paper fibre.

4.   A product according to Claim 1, 2 or 3, in which the ink contains an ink vehicle which subsequent to printing undergoes cross-linking or other polymerisation to produce large three-dimensional particles which become entangled with the paper fibres.

5.   A product according to Claim 4, in which the ink is a non-heat set web-offset, a sheet-fed offset or a U.V.-cured ink.

6.   A product according to any one of the preceding claims, in which the conditions employed for cleavage are reductive or oxidative conditions.

7.   A product according to any one of Claims 1 to 5, in which the conditions employed for cleavage are alkaline conditions.

8.   A product according to Claim 7, in which the alkaline conditions employed for cleavage are the mildly alkaline conditions which prevail during the pulping of waste paper.

9.   A product according to Claim 7 or 8, in which the cleavable linkages comprise acylsiloxy, phosphate ester or carbonate linkages.

10.   A product according to Claim 7 or 8, in which the cleavable linkages comprise silicon ether linkages.

11.   A product according to Claim 10, in which the modified ink has a silicon content of from about .1 up to about 5% by weight.

12.   A product according to Claim 11, in which the modified ink has a silicon content of from about .5 up to about 2% by weight.

13. A process for the production of a product according to any one of claims 1, 2 and 4-12, in which linkages are incorporated into polyester or alkyd resin vehicles during the initial stages of their preparation by appropriate reaction of the polyhydric alcohol component.

14. A process for the production of a product according to any one of Claims 1, 2 and 4-12, in which cleavable linkages are incorporated into the polyester or alkyd resin ink vehicle by reaction with free hydroxyl groups present in the polyester or alkyd resin.

15. A process for the production of a modifier additive according to any one of Claims 3-12, in which the remaining free hydroxyl groups of partially esterified or etherified polyhydric alcohols are esterified with suitable organic acids.

**European Patent Office**

**EUROPEAN SEARCH REPORT**

0001711

Application number

EP 78 30 0520

| Category | Citation of document with indication, where appropriate, of relevant passages | Relevant to claim |
|---|---|---|
| A | <u>FR - A - 2 249 143</u> (DAI NIPPON)<br>* The claims * | 1 |
| A | <u>FR - A - 2 249 142</u> (DAI NIPPON)<br>* The claims * | 1 |
| A | <u>US - A - 3 997 485</u> (R. DOWBENKO)<br>* Claims 1,3 * | 1 |

## DOCUMENTS CONSIDERED TO BE RELEVANT

### CLASSIFICATION OF THE APPLICATION (Int. Cl.²)

C 09 D 11/02
        11/10
C 08 L 67/08

### TECHNICAL FIELDS SEARCHED (Int.Cl.²)

C 09 D 11/02
        11/10

### CATEGORY OF CITED DOCUMENTS

X: particularly relevant
A: technological background
O: non-written disclosure
P: intermediate document
T: theory or principle underlying
   the invention
E: conflicting application
D: document cited in the
   application
L: citation for other reasons

&: member of the same patent
family,
corresponding document

The present search report has been drawn up for all claims

| Place of search | Date of completion of the search | Examiner |
|---|---|---|
| The Hague | 19-01-1979 | DE ROECK |

EPO Form 1503.1   06.78